# FASCICULE DE BREVET EUROPEEN

(11) **EP 2 531 672 B1**
(45) Date de publication et mention de la délivrance du brevet: **09.04.2014**
(21) Numéro de dépôt: 10707481.7
(22) Date de dépôt: 01.02.2010
(51) Int. Cl.: E04G 23/02, C04B 41/50, C04B 41/65, C04B 41/45

(54) **PROCEDE ET SYSTEME D'INJECTION DE LIQUIDE DANS UN MATERIAU POREUX**
Verfahren und System zur Einspritzung einer Flüssigkeit in ein poröses Material
Method and system for injecting a liquid into a porous material.

(43) Date de publication de la demande: 12.12.2012
(73) Titulaire: PMD-ATEAV Systems SPRL, 1421 Ophain-Boin-Seigneur-Isaac (BE)
(72) Inventeur: DUBOIS, Pierre-Marie, B-1421 Ophain-bois-seigneur-isaac (BE); MICHAUX, Daniel, F-93190 Livry Gargan (FR)
(74) Mandataire: Pronovem
(86) Numéro de dépôt international: PCT/EP2010/051205
(87) Numéro de publication internationale: WO 2011/091862

(56) Documents cités:
- EP-A- 0 733 757
- GB-A- 1 479 020
- GB-A- 1 480 718
- GB-A- 1 495 158
- US-A- 5 427 819

## Description

### Objet de l'invention

L'invention concerne le domaine des traitements des matériaux solides, en particulier dans l'injection de liquide dans des matériaux poreux, ou comprenant des interfaces de discontinuité, en vue d'en améliorer leurs propriétés.

En particulier la présente invention concerne la protection contre les effets de l'oxydation des armatures actives ou passives noyées dans une masse de béton, lesdites armatures pouvant se présenter sous forme d'ensemble de fils, de torons ou de barres métalliques disposés soit dans une gaine, soit sans gaine.

### Etat de la technique

Il est bien connu de l'homme du métier que les matériaux de constructions soumis aux conditions extérieures ont tendance à se dégrader ; qu'il s'agisse de processus de fissuration dû au gel et à l'humidité, de corrosion d'armatures dans les bétons ou d'autres agressions,....
Face à ces dégradations potentielles, l'homme du métier applique différentes méthodes.

Afin de limiter les infiltrations d'eau dans le béton contaminée par des produits tels que les chlorures, les effets du gel, les effets de carbonatation de l'air, il est bien connu de retirer les parties dégradées du béton, et d'appliquer un enduit de réparation. Cette méthode présente l'inconvénient de ne traiter le béton que de manière superficielle.

Dans le cadre de structures renforcées par des armatures métalliques, précontraintes, ou non, dégradées par la corrosion, différentes autres solutions ont été proposées.

Le brevet US5427819 décrit une méthode pour la réhabilitation des bétons armés, dans laquelle on enlève la majeure partie du béton au dessus d'une armature à traiter, on sature le béton restant à proximité immédiate de l'armature avec un inhibiteur de corrosion spécifique à la corrosion due aux chlorures, et enfin, on replace un mortier ayant une faible perméabilité à la place de béton enlevé à la première étape. Dans le cas d'un béton armé subissant une corrosion généralisée, cette méthode est complexe et couteuse.

Le brevet US5422141 décrit une composition pour la réhabilitation des bétons armés comprenant des inhibiteurs de corrosion et des agents de pénétration de la composition, cette composition étant appliquée depuis la surface du béton armé. Si la diffusion de ladite composition est insuffisante, la pénétration de la composition est améliorée par une scarification de la surface à traiter, cette scarification pouvant s'approcher jusqu'à environ 1 cm des armatures à traiter.

Une autre stratégie connue de l'homme du métier consiste en une protection cathodique des armatures tel que décrit dans le document US5228959. L'inconvénient de ce type de méthode est de nécessiter un suivi régulier durant toute la durée de vie de la structure, et d'être fort couteux d'application. De plus elle ne convient pas pour traiter les armatures précontraintes qui risquent de se fragiliser.

Le brevet EP0733757 décrit une méthode pour imprégner des bétons précontraints dans laquelle une solution contenant des inhibiteurs de corrosion est injectée à basse pression dans des trous percés jusqu'aux armatures à traiter. La pénétration de la solution de traitement est aidée par l'application d'une onde acoustique au sein du liquide et générée par une pompe à ultrasons de puissance dans une chambre de compression externe. Cette méthode présente l'inconvénient que ces ultrasons subissent une atténuation fonction de la profondeur du traitement. Ce brevet ne décrit pas non plus de méthode de traitement de surface de bétons armés.

### Buts de l'invention

La présente invention vise à fournir une méthode et un système d'injection de liquide dans des matériaux poreux ou comprenant des interfaces de discontinuités tel que des bétons, pierres, ... et qui ne présentent pas les inconvénients de l'art antérieur.

La présente invention vise en particulier à imprégner en profondeur les surfaces ou les discontinuités de ces matériaux, en particulier à proximité de structures de renfort, plus particulièrement les armatures métalliques et les câbles de précontrainte.

### Résumé de l'invention

Un premier aspect de la présente invention concerne un procédé d'injection d'un liquide dans un matériau poreux ou comprenant des interfaces de discontinuité, ledit procédé comprenant les étapes de :
- fixation d'une pièce d'injection audit matériau, ladite pièce d'injection délimitant, avec au moins une surface dudit matériau, une chambre de compression ;
- injection dans ladite chambre de compression dudit liquide et application audit liquide d'une onde acoustique de haute puissance au moyen d'un élément pulsant, ledit élément pulsant étant prolongé jusque dans ladite chambre de compression.

Selon des modes préférés d'exécution de l'invention, le procédé d'injection de liquide comporte au moins une, ou une combinaison quelconque appropriée, des caractéristiques suivantes :
- la chambre de compression est essentiellement délimitée par les parois d'une cavité du matériau ;
- préalablement à la fixation de la pièce d'injection au matériau, on perce la cavité dans ledit matériau ;
- le matériau comprend une ou plusieurs structure(s) de renfort métalliques et en ce que la cavité percée dans le matériau ne débouche pas sur la structure de renfort métallique dudit matériau ;
- le matériau comprend une ou plusieurs structure(s) de renfort métalliques et en ce que la cavité percée dans le matériau débouche sur la structure de renfort métallique dudit matériau ;
- ledit matériau comprend du béton ;
- ledit matériau comprend une ou plusieurs structures de renfort métalliques ;
- le liquide comprend des inhibiteurs de corrosion ;
- le liquide comprend des nitrites et ledit liquide est à un pH compris entre 10 et 12,5 ;
- le liquide comprend un colorant ;
- ledit matériau comprend des assemblages métalliques comprenant des interfaces (11) métal sur métal ;
- l'onde acoustique de haute puissance présente une fréquence supérieure à 20kHz.
- l'on utilise une ou plusieurs enceintes de mise sous vide disposées sur une ou plusieurs surfaces du matériau, qui sont mise(s) en dépression, facilitant ainsi le transport du liquide à travers le matériau poreux ou les interfaces de discontinuité présents dans le matériau poreux.

Un autre aspect de l'invention concerne un système permettant l'application du procédé de l'invention et comprenant :
- une source d'onde acoustique de haute puissance comprenant un élément pulsant;
- une pièce d'injection permettant l'injection d'un liquide sous pression, la dite pièce d'injection comprenant un ou plusieurs moyen(s) de fixation apte à fixer la dite pièce d'injection sur un matériau poreux et ladite pièce d'injection étant apte à former avec une surface du matériau, une chambre de compression contre ou dans le dit matériau poreux ;
caractérisé en ce que, l'élément pulsant venant en saillie de la pièce d'injection, est apte à générer une onde acoustique au sein de ladite chambre de compression.

Dans un mode préféré d'exécution de l'invention, l'élément pulsant coulisse par rapport à la pièce d'injection de façon à pouvoir régler sa position, au moyen d'un support coulissant.

La présente invention divulgue aussi système permettant l'application du procédé tel que décrit ci-dessus et comprenant :
- une source d'onde acoustique de haute puissance comprenant un élément pulsant;
- une pièce d'injection permettant l'injection d'un liquide, ladite pièce d'injection comprenant un ou plusieurs moyen(s) de fixation apte à fixer ladite pièce d'injection sur un assemblage métallique, et ladite pièce d'injection étant apte à former avec une surface de l'assemblage au droit d'un interface, une chambre de compression contre ledit assemblage ;
caractérisé en ce que, l'élément pulsant venant en saillie de la pièce d'injection, est apte à générer une onde acoustique au sein de ladite chambre de compression permettant de traiter l'interface métallique.

### Brève description des figures

La figure 1 décrit un mode particulier de réalisation de la présente invention dans le cas du traitement de béton armé ou précontraint.
La figure 2 représente un mode particulier de réalisation de l'invention dans lequel un vide est appliqué sur une surface arrière opposée du matériau traité. Le vide peut également être appliqué sur la surface avant entourant le dispositif ultrasonore.
La figure 3 représente une application particulière de l'invention, dans laquelle on traite l'interface entre deux éléments, par exemple deux tôles métalliques.

### Description détaillée de l'invention

Un premier objet de la présente invention se rapporte à une méthode pour l'injection d'un liquide dans un matériau poreux dans laquelle on injecte ledit liquide dans une chambre de compression composée, au moins en partie, par une surface dudit matériau à traiter. Une particularité de l'invention consiste à aider la pénétration du liquide par l'application d'onde acoustique de haute puissance. Préférablement, la puissance est suffisante pour provoquer un phénomène de cavitation en phase vapeur. La densité de puissance ultrasonore au sein du liquide est supérieure à 5W/l, de préférence supérieure à 10W/l. De préférence, la fréquence des ultrasons injectés est comprise entre 20 et 100 kHz.

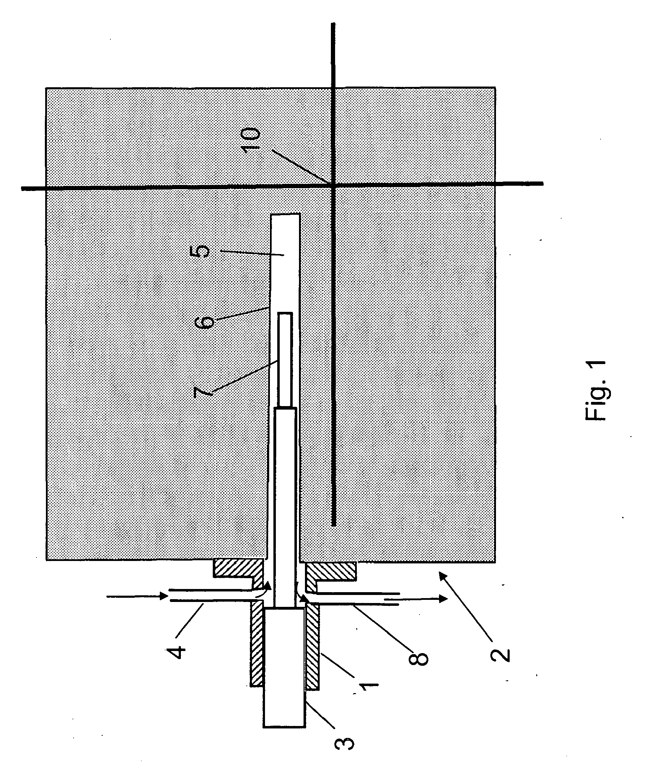

De préférence, l'invention se rapporte à une méthode dans laquelle une onde acoustique est générée à proximité immédiate de l'endroit du matériau poreux à traiter, dans une chambre de compression formée par au moins une surface 6 dudit matériau (Fig. 1). Cette méthode peut s'appliquer à proximité des surfaces extérieures dudit matériau soit en profondeur dans le dit matériau et en particulier soit à proximité d'armatures métalliques de renfort, soit dans les câbles de précontrainte, via une chambre de compression formée dans une cavité 5 pratiquée dans ledit matériau (voir Fig. 1). Cette cavité peut par exemple être obtenue par perçage. Cette méthode permet donc entre autre de protéger des structures métalliques des bétons armés sans en modifier l'aspect, hormis les réparations superficielles pratiquées dans des altérations de ces bétons. La cavité percée peut être tubée ou non.

Dans un mode particulier de la présente invention, utilisée dans le cadre du traitement des bétons armés ou précontraints, l'onde acoustique se présente sous forme d'ondes ultrasonores de puissance générant une cavitation en phase vapeur. De manière avantageuse, un décapage supplémentaire des produits de corrosion des armatures métalliques peut alors être obtenu. De préférence, pour le traitement des bétons précontraints ou armés, une chambre est crée en pratiquant une perforation dans le béton, et émergeant avantageusement sur ou à proximité des armatures métalliques à traiter.

Dans un mode préféré de réalisation de l'invention, on positionne la source des ultrasons de puissance à proximité immédiate des armatures à traiter afin de favoriser, grâce à la vibration générée par les ultrasons une migration d'un liquide tel qu'un inhibiteur de corrosion.

Dans un autre mode de réalisation de l'invention, le liquide est injecté dans la porosité du matériau afin d'imprégner les volumes à traiter.

La méthode de la présente invention peut aussi être utilisée pour obtenir une injection de liquide entre deux surfaces de structures tel que par exemple des noeuds d'assemblage de charpentes métalliques. Une enceinte de compression, telle que décrite plus haut, est alors appliquée à l'endroit de l'interface.

Le liquide injecté pénètre en profondeur, même avec des interfaces très rapprochées, de l'ordre de quelques dizaines de microns.

La pression d'injection du liquide est adaptée à la résistance mécanique à l'éclatement du matériau. Pour le béton elle est limitée à quelques bars. Pour d'autres matériaux elle peut être adaptée aux capacités de résistance du matériau traité.

Enfin, lorsque les deux faces du matériau à traiter sont accessibles, il peut être utile de placer un second dispositif comprenant une enceinte placée sur une surface opposée à la surface sur laquelle le système d'injection de liquide, de l'invention est disposé, et de créer le vide dans cette seconde enceinte, de manière à améliorer la migration du liquide dans le matériau. Le vide peut également être appliqué sur la surface avant ou latérale entourant le dispositif ultrasonore.

La nature des liquides injectés est fonction de la problématique à traiter : il peut s'agir d'inhibiteurs de corrosion dans le cas de bétons armés ou précontraints, ou, d'autres produits permettant par exemple de réduire la porosité du matériau après traitement, sans que ces exemples d'imprégnation soient limitatifs.

Parmi les inhibiteurs de corrosions, ceux à base de nitrite, tel que les nitrites de calcium ou de sodium sont particulièrement adaptés au traitement de structures de renfort telle que des armatures ou câbles métalliques sujets à la corrosion en présence de chlorures, ces derniers pouvant avoir été apportés lors de la fabrication initiale du béton ou par d'autres produits tel que des sels de déneigement ou dans les milieux marins. Des compositions à base de nitrite ayant un pH stable compris entre environ 10 et environ 12,5, sont particulièrement efficaces. Eventuellement, l'addition au liquide d'inhibiteurs organiques peuvent encore améliorer l'efficacité du mélange.

Dans le cas du traitement de matériaux poreux particuliers comme des bétons comprenant des structures de renfort comme des armatures métalliques, il peut être utile de déterminer préalablement aux étapes du procédé de traitement de l'invention, la concentration en chlorures dans les différentes parties du matériau à traiter. En effet, ces chlorures sont les principaux responsables des phénomènes de corrosions des armatures métalliques. Il est alors possible de limiter le procédé traitement de la présente invention aux zones montrant une concentration en chlorures supérieure à un certain seuil. De préférence, on veillera à traiter plus spécifiquement les zones dans lesquelles la concentration en ions chlorure est supérieure à 0,1% Cl⁻ par rapport à la masse de béton.

Par le procédé de l'invention, la migration du liquide peut être contrôlée visuellement, en observant la couleur du matériau traité, ou le suage du liquide à une autre extrémité d'une interface. Cette observation peut-être facilitée par l'ajout de colorants dans le liquide de traitement.

### Description d'une forme d'exécution préférée de l'invention

La figure 1 représente un mode particulier de réalisation du procédé de l'invention, appliqué au traitement de bétons armés ou précontraints. Le système permettant l'application du procédé de l'invention, comporte une pièce d'injection 1 comprenant un tube d'admission 4 permettant l'injection d'un liquide dans une chambre de compression 5. Ladite chambre de compression 5 est formée essentiellement par les parois 6 d'une cavité pratiquée (percée) dans une surface dudit matériau à traiter 2. Un tube de sortie 8 permet l'évacuation du liquide de traitement. Ce liquide peut être contrôlé et ensuite reinjecté.

La pénétration du liquide dans le matériau poreux est réalisée par l'émission d'une onde acoustique de haute puissance générée au moyen d'un élément pulsant 7.

La profondeur à laquelle l'élément pulsant 7 génère l'onde acoustique peut-être réglée par le coulissement d'une pièce mobile 3 par rapport à la pièce d'injection 1. En particulier on peut obtenir aussi un meilleur nettoyage des porosités, des fissures et microfissures présentes dans le milieu poreux permettant d'optimiser la pénétration du liquide dans le dit milieu.

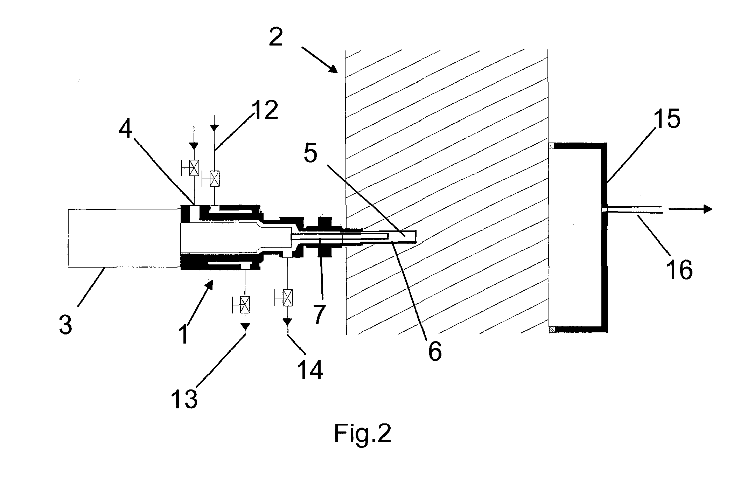

Dans une forme particulière de réalisation de l'invention (Fig. 2), on améliore la pénétration au sein du matériau poreux 2 du liquide par l'utilisation d'une enceinte 15 dans laquelle le vide peut être créé par des moyens 16 connus de l'homme de l'art, la dite enceinte 15 pouvant être disposée sur toute surface du matériau 2 à traiter, tel que représenté à la figure 2 cas de la surface opposée. Dans la forme d'exécution représentée sur cette figure, la pièce d'injection 1 utilisée ici comprend, outre le tube d'admission 4 du liquide de traitement, un circuit de refroidissement, avec une entrée 12 et une sortie 13 du liquide de refroidissement ainsi qu'un tube de sortie 14 du liquide de traitement. Ce tube de sortie 14 permet d'établir une circulation dudit liquide de traitement dans la chambre de compression 5, par exemple, en vue de son refroidissement ou de son contrôle.

Cette configuration du système est préférée, car les ondes acoustiques de puissance générées peuvent induire un échauffement local important qui peut être compensé par le circuit de refroidissement.

Il est important de noter que l'utilisation de la méthode de la présente invention ne se limite pas aux traitements des bétons armés par des inhibiteurs de corrosions. La méthode étant non destructive, cette méthode est aussi utilisable dans la rénovation de monuments classés ou non et permet, par exemple, le traitement de pierres calcaires attaquées par la pollution atmosphérique, l'injection d'inhibiteurs de corrosion le long d'armatures ajoutées dans des monuments classés ou non lors de rénovations, etc.

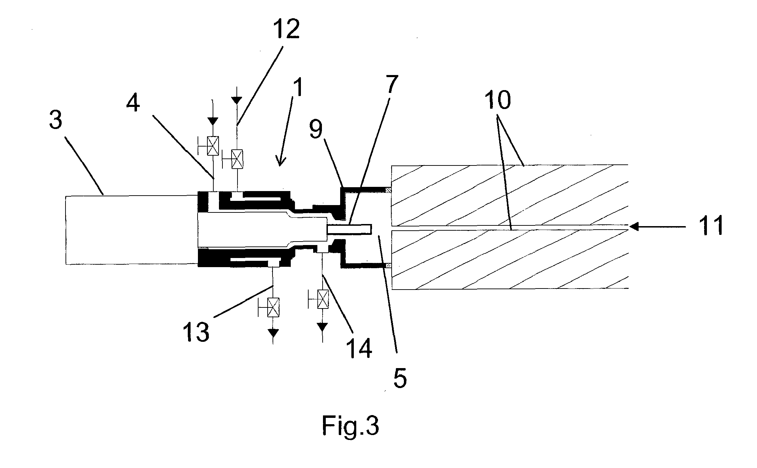

La figure 3 représente l'utilisation de la présente méthode à une interface 11 entre deux plaques métalliques 10. Tel que décrit plus haut, on a aussi représenté sur cette figure des moyens de refroidissement et de renouvellement du liquide de traitement.

## Revendications

1. Un procédé d'injection d'un liquide dans un matériau (2) poreux ou comprenant des interfaces de discontinuité, ledit procédé comprenant les étapes de :
- fixation d'une pièce d'injection (1) audit matériau, ladite pièce d'injection (1) délimitant, avec au moins une surface dudit matériau (6), une chambre de compression (5);
- injection dans ladite chambre de compression (5) dudit liquide et application audit liquide d'une onde acoustique de haute puissance au moyen d'un élément pulsant (7), ledit élément pulsant étant prolongé jusque dans ladite chambre de compression.

2. Le procédé d'injection selon la revendication 1 **caractérisé en ce que** la chambre de compression (5) est essentiellement délimitée par les parois (6) d'une cavité du matériau.

3. Le procédé d'injection selon la revendication 2 **caractérisé en ce que** préalablement à la fixation de la pièce d'injection au matériau, on perce la cavité dans ledit matériau.

4. Le procédé selon la revendication 3, **caractérisé en ce que** le matériau comprend une ou plusieurs structure(s) de renfort métalliques (10) et **en ce que** la cavité percée dans le matériau ne débouche pas sur la structure de renfort métallique (10) dudit matériau.

5. Le procédé selon la revendication 3, **caractérisé en ce que** le matériau comprend une ou plusieurs structure(s) de renfort métalliques (10) et **en ce que** la cavité percée dans le matériau débouche sur la structure de renfort métallique dudit matériau.

6. Le procédé d'injection selon l'une quelconque des revendications précédentes **caractérisé en ce que** ledit matériau (2) comprend du béton.

7. Le procédé d'injection selon la revendication 6 **caractérisé en ce que** ledit matériau comprend une ou plusieurs structures de renfort métalliques (10).

8. Le procédé d'injection selon la revendication 7 **caractérisé en ce que** le liquide comprend des inhibiteurs de corrosion.

9. Le procédé d'injection selon la revendication 7 **caractérisé en ce que** le liquide comprend des nitrites et ledit liquide est à un pH compris entre 10 et 12,5.

10. Le procédé d'injection selon l'une quelconque des revendications précédentes **caractérisé en ce que** le liquide comprend un colorant.

11. Le procédé d'injection selon l'une quelconque des revendications 1 à 3 **caractérisé en ce que** ledit matériau comprend des assemblages métalliques comprenant des interfaces (11) métal sur métal.

12. Le procédé d'injection selon l'une quelconque des revendications précédentes, **caractérisé en ce que** l'onde acoustique de haute puissance présente une fréquence supérieure à 20kHz.

13. Le procédé d'injection selon l'une quelconque des revendications précédentes, **caractérisé en ce que** l'on utilise une ou plusieurs enceintes (15) de mise sous vide disposées sur une ou plusieurs surfaces du matériau, qui sont mise(s) en dépression, facilitant ainsi le transport du liquide à travers le matériau (2) poreux ou les interfaces de discontinuité présents dans le matériau (2) poreux.

14. Un système permettant l'application du procédé selon l'une quelconque des revendications précédentes 1 à 13 et comprenant :
- une source d'onde acoustique de haute puissance comprenant un élément pulsant (7) ;
- une pièce d'injection (1) permettant l'injection d'un liquide sous pression, la dite pièce d'injection (1) comprenant un ou plusieurs moyen(s) de fixation apte à fixer la dite pièce d'injection (1) sur un matériau (2) poreux et ladite pièce d'injection (1) étant apte à former avec une surface du matériau (2), une chambre de compression (5)contre ou dans le dit matériau (2) poreux ;
**caractérisé en ce que**, l'élément pulsant (7) venant en saillie de la pièce d'injection (1), est apte à générer une onde acoustique au sein de ladite chambre de compression (5).

## Patentansprüche

1. Verfahren zum Einspritzen einer Flüssigkeit in ein poröses Material (2) oder umfassend diskontinuierliche Stellen, wobei das Verfahren die folgenden Schritte umfasst:
- Befestigung eines Einspritzteils (1) am Material, wobei der Einspritzteil (1) mit mindestens einer Fläche des Materials (6) eine Druckkammer (5) begrenzt;
- Einspritzen der Flüssigkeit in die Druckkammer (5) und Anlegen einer akustischen Hochleistungswelle an die Flüssigkeit mit Hilfe eines Impulselements (7), wobei das Impulselement bis in die Druckkammer verlängert ist.

2. Einspritzverfahren nach Anspruch 1, **dadurch gekennzeichnet, dass** die Druckkammer (5) im Wesentlichen von den Wänden (6) eines Hohlraums des Materials begrenzt ist.

3. Einspritzverfahren nach Anspruch 2, **dadurch gekennzeichnet, dass** vor der Befestigung des Einspritzteils am Material der Hohlraum in das Material gebohrt wird.

4. Verfahren nach Anspruch 3, **dadurch gekennzeichnet, dass** das Material eine oder mehrere metallische Verstärkungsstruktur(en) (10) umfasst, und dass der in das Material gebohrte Hohlraum nicht auf der metallischen Verstärkungsstruktur (10) des Materials mündet.

5. Verfahren nach Anspruch 3, **dadurch gekennzeichnet, dass** das Material eine oder mehrere metallische Verstärkungsstruktur(en) (10) umfasst, und dass der in das Material gebohrte Hohlraum auf der metallischen Verstärkungsstruktur des Materials mündet.

6. Einspritzverfahren nach einem der vorhergehenden Ansprüche, **dadurch gekennzeichnet, dass** das Material (2) Beton umfasst.

7. Einspritzverfahren nach Anspruch 6, **dadurch gekennzeichnet, dass** das Material eine oder mehrere metallische Verstärkungsstrukturen (10) umfasst.

8. Einspritzverfahren nach Anspruch 7, **dadurch gekennzeichnet, dass** die Flüssigkeit Korrosionshemmer umfasst.

9. Einspritzverfahren nach Anspruch 7, **dadurch gekennzeichnet, dass** die Flüssigkeit Nitrite umfasst, und dass die Flüssigkeit einen pH-Wert zwischen 10 und 12,5 aufweist.

10. Einspritzverfahren nach einem der vorhergehenden Ansprüche, **dadurch gekennzeichnet, dass** die Flüssigkeit einen Farbstoff umfasst.

11. Einspritzverfahren nach einem der Ansprüche 1 bis 3, **dadurch gekennzeichnet, dass** das Material metallische Verbindungen aufwiest, umfassend Schnittstellen (11) Metall auf Metall.

12. Einspritzverfahren nach einem der vorhergehenden Ansprüche, **dadurch gekennzeichnet, dass** die akustische Hochleistungswelle eine Frequenz über 20 kHz aufweist.

13. Einspritzverfahren nach einem der vorhergehenden Ansprüche, **dadurch gekennzeichnet, dass** ein oder mehrere Vakuumräume (15), die auf einer oder mehreren Flächen des Materials angeordnet sind, verwendet werden, die unter Unterdruck gesetzt werden und so die Beförderung der Flüssigkeit durch das poröse Material (2) oder die diskontinuierlichen Stellen, die im porösen Material (2) vorhanden sind, erleichtern.

14. System, das die Anwendung des Verfahrens nach einem der vorhergehenden Ansprüche 1 bis 13 ermöglicht, umfassend:
- eine Quelle einer akustischen Hochleistungswelle, umfassend ein Impulselement (7);
- einen Einspritzteil (1), der das Einspritzen einer Flüssigkeit unter Druck ermöglicht, wobei der Einspritzteil (1) ein oder mehrere Befestigungsmittel umfasst, die geeignet sind, den Einspritzteil (1) auf einem porösen Material (2) zu befestigen, und wobei der Einspritzteil (1) geeignet ist, mit einer Fläche des Materials (2) eine Druckkammer (5) an oder in dem porösen Material (2) zu bilden;
**dadurch gekennzeichnet, dass** das Impulselement (7), das über den Einspritzteil (1) hinausragt, geeignet ist, eine akustische Welle innerhalb der Druckkammer (5) zu erzeugen.

## Claims

1. A method for injecting a liquid into a porous material (2) or comprising discontinuity interfaces, said method comprising the steps of:
- attaching an injection part (1) to said material, said injection part (1) delimiting, with at least one surface of said material (6), a compression chamber (5);
- injecting said liquid into said compression chamber (5) and applying to said liquid a high power acoustic wave by means of a pulsating element (7), said pulsating element extending into said compression chamber.

2. The injection method according to claim 1, **characterized in that** the compression chamber (5) is essentially delimited by the walls (6) of a cavity of the material.

3. The injection method according to claim 2, **characterized in that** prior to the attachment of the injection part to the material, the cavity is pierced in said material.

4. The method according to claim 3, **characterized in that** the material comprises one or more metal reinforcement structures (10), and **in that** the pierced cavity in the material does not open out onto the metal reinforcement structure (10) of said material.

5. The method according to claim 3, **characterized in that** the material comprises one or more metal reinforcement structures (10), and **in that** the pierced cavity in the material opens out onto the metal reinforcement structure of said material.

6. The injection method according to any of the preceding claims, **characterized in that** said material (2) comprises concrete.

7. The injection method according to claim 6, **characterized in that** said material comprises one or more metal reinforcement structures (10).

8. The injection method according to claim 7, **characterized in that** the liquid comprises corrosion inhibitors.

9. The injection method according to claim 7, **characterized in that** the liquid comprises nitrites and said liquid is at a pH comprised between 10 and 12.5.

10. The injection method according to any of the preceding claims, **characterized in that** the liquid comprises a coloring agent.

11. The injection method according to any of claims 1 to 3, **characterized in that** said material comprises metal assemblies comprising metal-on-metal interfaces (11).

12. The injection method according to any of the preceding claims, **characterized in that** the high power acoustic wave has a frequency of more than 20kHz.

13. The injection method according to any of the preceding claims, **characterized in that** one or several vacuum enclosures (15) are used, positioned on one or several surfaces of the material, which are depressurized, thereby promoting transport of the liquid through the porous material (2) or the discontinuity interfaces present in the porous material (2).

14. A system allowing the application of the method according to any of the preceding claims 1 to 13 and comprising:
- a high power acoustic wave source comprising a pulsating element (7);
- an injection part (1) allowing injection of a pressurized liquid, said injection part (1) comprising one or more attachment means capable of attaching said injection part (1) onto a porous material (2) and said injection part (1) being able to form with a surface of the material (2), a compression chamber (5) against or in said porous material (2);
**characterized in that** the pulsating element (7) protruding from the injection part (1) is capable of generating an acoustic wave within said compression chamber (5).
